# EUROPÄISCHE PATENTANMELDUNG

(11) **EP 2 543 933 A2**
(43) Veröffentlichungstag der Anmeldung: **09.01.2013**
(21) Anmeldenummer: 12004791.5
(22) Anmeldetag: 27.06.2012
(51) Int. Cl.: F24D 19/00

(54) **Heizkörper mit Anschlussmöglichkeiten für zwei Fluidkreisläufe**

(30) Priorität: 02.07.2011 DE 102011106407
(71) Anmelder: Institut für Solarenergieforschung GmbH, 31860 Emmerthal (DE)
(72) Erfinder: Pärisch, Peter, 31785 Hameln (DE); Bertram, Erik, 31139 Hildesheim (DE)

(57) **Zusammenfassung**

Heizkörper mit mindestens zwei Anschlussmöglichkeiten, nämlich Ein- und Austritt (1a, 1b), für einen ersten Fluidkreislauf, vorzugsweise einen Heizungskreislauf, zur Übertragung von Wärme an die Raumluft mit mindestens zwei weiteren Anschlussmöglichkeiten, nämlich Ein- und Austritt (2a, 2b), an die ein zweiter Fluidkreislauf, insbesondere ein Solarkreislauf, angeschlossen werden kann, dadurch gekennzeichnet, dass es einen von beiden Fluidkreisläufen durchströmbaren Hohlkörper (3) zur Übertragung thermischer Leistung gibt sowie Verfahren für dessen Betrieb.

## Beschreibung

Die Erfindung betrifft einen Heizkörper zur Übertragung von Wärme durch Konvektion und Strahlung an die Raumluft, an den zwei Fluidkreisläufe, insbesondere ein solar beheizter Kreislauf und ein konventionell beheizter Nachheizkreislauf angeschlossen werden können, wobei mindestens ein Hohlkörper von beiden Fluidkreisläufen durchströmt wird und der Hohlkörper, insbesondere eine hohle Platte aus thermisch gut leitfähigem Material, zum Beispiel einem Metall, hergestellt und von Fluidkanälen in der Weise durchsetzt ist, dass sich ein guter Wärmeübergang einstellt.

Die Heizungsunterstützung mit Hilfe von solarthermischen Kollektoren erfreut sich in Deutschland zunehmender Verbreitung. Vor allem in den Übergangszeiten, also im Frühling und im Herbst, muss dadurch weniger Heizwärme auf konventionellem Weg erzeugt werden.

Konventionell wird Heizwärme in Deutschland hauptsächlich entweder über die Verbrennung eines Brennstoffs wie zum Beispiel Erdgas, Heizöl, Holzpellets in einem Heizkessel oder über einen thermodynamischen Kreisprozess mit Hilfe einer elektrischen Kompressionswärmepumpe erzeugt. Die Solarwärme für die Heizungsunterstützung reduziert in den Übergangszeiten also entweder den Brennstoff- oder den Stromverbrauch und die damit verbundenen Kosten und Umweltbelastungen.

Die Einkopplung von Solarwärme in das Heizsystem wird in der Regel auf zwei verschiedene Arten durchgeführt.

Erstens kann die Solarwärme mit Hilfe eines Wärmeübertragers direkt an das Verteilnetz des Heizungswassers übertragen werden. Ein Beispiel für ein Verteilnetz mit drei Fluidleitungen, an die mittels Wärmeübertrager Solarwärme übertragen wird, ist in EP 0647 818 B1 dargestellt.

Diese Variante hat den Nachteil, dass durch den Wärmeübertrager zwischen Solar- und Heizkreislauf die Arbeitstemperatur im Kollektor je nach Dimensionierung um 5 bis 10 K ansteigt, was eine Verschlechterung des Nutzungsgrads um 8 bis 16 % zur Folge hat. Ein weiterer Nachteil ist, dass der Wärmeübertrager bei Nachrüstung in Bestandsgebäuden oft im besser zugänglichen Keller angeordnet wird, so dass ein Teil der Solarwärme über die verteilenden Rohrleitungen des Solarkreislaufs und des Heizungskreislaufs verloren geht. Zudem muss die Kollektortemperatur die Heizkreisrücklauftemperatur überschreiten, um Nutzwärme liefern zu können, was mögliche Betriebszeiten reduziert.

Zweitens kann die Solarwärme in einen Heizungspufferspeicher oder in einen Kombispeicher eingespeist werden, der durch mindestens einen Heizungskreislauf bedarfsgerecht entladen wird. Dabei wird Flüssigkeit aus dem solar erwärmten Speicher entnommen, wenn diese wärmer ist als die Flüssigkeit im Heizungskreislauf (Vorlauf- oder Rücklaufanhebung). Exemplarisch ist eine Rücklaufanhebung in DE 10 2009 038 738 A1 dargestellt.

Die zweite Variante hat zusätzlich zu den Verteilverlusten und der ebenfalls hohen Kollektor-Arbeitstemperatur den Nachteil, dass der Wärmespeicher größer dimensioniert werden muss, was erhöhte Verluste bedeutet. Die Wärmeverluste eines Wärmespeichers über Dämmhülle, Wärmebrücken und Rohrleitungsanschlüsse steigen ungefähr mit dem Volumen in der Potenz 0,4. Durch die genannten Nachteile geht ein Teil der Solarwärme verloren und kann nicht der Nutzung zugeführt werden. Der größere Speicher kann sogar eine Erhöhung der konventionell zu erzeugenden Heizwärmemenge bewirken.

Es wurden daher unterschiedliche Konzepte entwickelt, um die Speicher- und die Verteilverluste zu reduzieren.

In DE 20 2009 013 236 U1 wird der Austritt des rein solar erwärmten Pufferspeichers mit dem Austritt des Kessels so gemischt, dass der Heizwärmebedarf, hier auch der Wärmebedarf für die Warmwasserbereitung, gedeckt werden kann. Es wird keine konventionelle Wärme gespeichert und der Speicher kann kleiner dimensioniert werden. Die Vorteile wirken sich vor allem bei langen Verteilnetzen in Mehrfamilienhäusern aus, wenn nur Solarwärme verteilt wird und dezentral in den Wohneinheiten nacherwärmt wird. Mehrere Kessel führen allerdings zu höheren Investitions- und Wartungskosten. Weiterhin wird die Lösung vornehmlich im Neubau realisiert oder erfordert eine Komplettsanierung des Wärmeversorgungssystems.

Solarthermische Unterstützung der Raumheizung gemäß dem oben beschriebenen Stand der Technik wird vor allem beim Neubau von Wohngebäuden realisiert. Bei der Komplettsanierung oder als Einzelmaßnahme zur Energieeinsparung in Bestandsgebäuden existieren vor allem finanzielle Hemmnisse.

Diese liegen einerseits in den erforderlichen Investitionskosten für Solarkollektoren, Wärmespeicher und Zubehör wie Rohrleitungen, Regelung, Pumpen und Sicherheitsarmaturen. Andererseits sind die Handwerkerkosten für die Anbringung der Solarkollektoren, den Austausch des Wärmespeichers, den Umbau sämtlicher Speicheranschlüsse und Verlegung der Rohrleitungen sowie der Datenleitungen nicht unerheblich.

Einige Ansätze beschäftigen sich mit der Frage, wie solarthermisches Heizen kostengünstiger in Bestandsgebäuden nachgerüstet werden kann.

CN 2548078 Y beschreibt eine thermosiphonisch funktionierende Solaranlage, bestehend aus Heizkörper, Verbindungsrohren und Solarkollektor. Regler und Umwälzpumpe sind nicht erforderlich, da die Umwälzung durch temperaturbedingte Dichteunterschiede angetrieben wird. Die Solaranlage weist dadurch geringe Investitionskosten und keine Betriebskosten auf. Der Solarkollektor muss tiefer als der Heizkörper angeordnet werden, damit es zu einer natürlichen Umwälzung infolge von Dichteunterschieden kommt. Die Verteilverluste sind gering, allerdings ist die Leistungsabgabe an den Wohnraum ungeregelt.

DE 42 00 252 C2 beschreibt eine Fußleistenheizung mit zwei übereinander oder nebeneinander angeordneten, thermisch getrennten Rippenrohrwärmetauschern. Die Rippenrohrwärmetauscher bilden keine bauliche Einheit. Dabei wird die Solarwärme in einem Rippenrohrwärmetauscher direkt für die Raumheizung eingesetzt. Wenn die Solarwärmeleistung nicht ausreicht, wird durch den zweiten Rippenrohrwärmetauscher das konventionell erwärmte Fluid zirkuliert und der Raum nachgeheizt. Sobald der Raum seine Maximaltemperatur erreicht hat, kann keine Solarwärme mehr genutzt werden. Weiterhin ist die Fußleistenheizung eher ein Nischenprodukt.

Der in DE 29 45 071 A1 beschriebene multivalente Heizkörper ermöglicht das Anschließen von mindestens zwei Fluidkreisläufen, insbesondere einen konventionellen Heizungskreislauf und einen Wärmepumpenkreislauf, unterschiedlicher Temperaturniveaus zur Beheizung eines Raumes. In einem Gehäuse, das oben Luftauslassöffnungen und unten Lufteinlassöffnungen besitzt, werden die beiden Fluidkreisläufe horizontal und etagenartig angeordnet. Hierbei liegt weitgehend eine thermische Entkopplung der Fluidkreisläufe vor, da eine Wärmeübertragung vom unteren auf den oberen Fluidkreislauf lediglich durch aufsteigende warme Luft erfolgen kann. Die Wärmeübertragung über Luft funktioniert jedoch sehr schlecht, da die Stoffeigenschaften von Luft ungünstig sind und die aufsteigende Luft selten wärmer ist als der obere, heißere Fluidkreislauf. In der Patentschrift werden rippenförmige Heizkörper beschrieben. Ein gemeinsamer von beiden Fluidkreisläufen durchströmter Hohlkörper mit hoher Wärmeübertragungsleistung bei kleinen Temperaturdifferenzen existiert nicht. Weiterhin wird beschrieben, dass der untere Fluidkreislauf auf Temperaturen knapp (ca. 5 K) über der Raumtemperatur betrieben wird.

Die Gebrauchsmusterschrift DE 200 14 447 U1 beschreibt ein plattenförmiges Wärmetauschelement, also einen Plattenheizkörper, wobei jede Platte eine Rohrleitung zum Durchleiten eines Wärmetauscherfluids aufweist. Ziel der Erfindung ist es, einen Plattenheizkörper in möglichst kompakter und herstellungstechnisch günstiger Weise bereitzustellen. Es ist nicht Ziel der Erfindung verschiedene Heizkreisläufe anzuschließen und erst recht nicht, eine thermische Kopplung zwischen beiden Heizkreisläufen zu erreichen, sondern die Raumluft möglichst effizient zu erwärmen. Eine thermische Kopplung ist mit dem beschriebenen Heizkörper technisch gar nicht möglich.

In WO 98/36222 ist ein Heizkörper mit zwei Fluidkreisläufen, einem konventionellen Heizungskreislauf und einem Trinkwarmwasserkreislauf, beschrieben. Beide sind in einem Gehäuse angeordnet, welches ein Durchströmen von Luft von unten nach oben ermöglicht. Mit dem konventionellen Heizungskreislauf soll eine Entlastung des Trinkwarmwasserkreislaufs im Winter erreicht werden, um Legionellenwachstum vorzubeugen. Im Sommer kann der konventionelle Heizkreislauf abgeschaltet werden. Eine Wärmeübertragung findet lediglich an die Raumluft statt. Zwischen den beiden Kreisläufen wird keine Wärme ausgetauscht.

Auch DE 32 15 582 A1 beschreibt einen Heizkörper zum Anschließen von zwei Fluidkreisläufen, einem konventionellen Heizungskreislauf und einem Trinkwarmwasserkreislauf. Der Heizkörper dient wie WO 98/36222 dazu, der Raumluft Wärme zuzuführen und nicht Wärme zwischen den beiden Fluidkreisläufen auszutauschen.

Weiterhin kennt der Stand der Technik Heizkörper mit Latentwärmespeicher, die entweder elektrisch (DE 10 2008 009 789 B4) oder mit einem Wärmeträgerfluid (DE 44 02 062 A1) beheizt werden. DE 44 02 062 A1 weist lediglich einen Fluidkreislauf auf.

Andere Lösungsansätze wie beispielsweise DE 26 49 273 A1 betreffen eine außenliegende Wandheizung, die unter einer neu anzubringenden Wärmedämmung der Außenwand von Bestandsgebäuden angebracht wird. In EP 20 80 955 A2 werden die Befestigung der Rohre mit Klammern und deren anschließendes Zuputzen beschrieben. Bei außenliegenden Wandheizungen sind die Installationskosten nachteilig, da ein möglichst großer Teil der Gebäudehülle mit einem Rohrsystem versehen werden muss.

Aufgabe der vorliegenden Erfindung ist es, die vorgenannten Nachteile weitestgehend zu vermeiden und eine preisgünstige, regelbare Lösung für die Nachrüstung der solaren Heizungsunterstützung in Bestandsgebäuden vor allem in Mehrfamilienhäusern zu liefern.

Dies gelingt durch einen erfindungsgemäßen Heizkörper nach Anspruch 1 und ein Verfahren für dessen Betrieb nach Anspruch 10.

Die Erfindung betrifft einen Heizkörper zur Übertragung von Wärme durch Konvektion und Strahlung an die Raumluft, der außer der Anschlussmöglichkeit für den ersten Fluidkreislauf, den Heizungskreislauf, eine Anschlussmöglichkeit für einen zweiten Fluidkreislauf, zum Beispiel einen Solarkreislauf, aufweist, dadurch gekennzeichnet, dass der zweite Fluidkreislauf mit dem ersten Fluidkreislauf thermisch gekoppelt ist oder wahlweise gekoppelt bzw. entkoppelt betrieben werden.

Weitgehend thermisch entkoppelte Fluidkreisläufe sind wie aus dem Stand der Technik bereits bekannt dadurch gegeben, dass unterschiedliche Hohlkörper von den Fluidkreisläufen durchströmt werden und dass diese Hohlkörper durch ein wärmedämmendes Material oder einen Luftzwischenraum getrennt sind.

Die thermische Kopplung wird dadurch realisiert, dass ein Hohlkörper von beiden Fluidkreisläufen durchströmt wird und dass der Hohlkörper, insbesondere eine hohle Platte aus thermisch gut leitfähigem Material, zum Beispiel einem Metall, hergestellt und von Fluidkanälen in der Weise durchsetzt ist, so dass sich ein guter Wärmeübergang einstellt.

Die wahlweise Kopplung der Fluidkreisläufe kann durch Umlenken eines Teilvolumenstroms oder des gesamten Volumenstroms des einen Fluidkreislaufs auf einen anderen, vom anderen Fluid durchströmten, Hohlkörper, zum Beispiel eine andere durchströmbare Platte, realisiert werden. Die Entkopplung wird entsprechend umgekehrt realisiert, indem die Fluidkreisläufe auf thermisch voneinander isolierte Hohlkörper verteilt werden.

In einer vorteilhaften Ausgestaltung ist vorgesehen, dass die Umlenkung mit Hilfe einer integrierten oder anschließbaren Vorrichtung zum Beispiel einer Pumpe, einem Absperrventil, einem Misch- oder Umschaltventil erfolgt.

Zum Zweck der Verringerung der Wärmeabgabe an die Raumluft bei hoher Solarstrahlung kann der von beiden Fluidkreisläufen durchströmbare Hohlkörper mit einer Wärmedämmung versehen sein. Das vermeidet sommerliche Überhitzung in dem Raum des Heizkörpers und erhöht den potenziellen solaren Nutzen in Heizkörpern anderer Gebäudeteile oder anderer Räume.

Zur Erhöhung der Speicherfähigkeit und damit zur Reduktion der mittleren Betriebstemperatur im zweiten Fluidkreislauf, insbesondere dem Solarkreislauf, besitzt der Heizkörper die Fähigkeit, Wärme bei 22 bis 45°C zum Beispiel durch Sorption zweier Medien, Phasenwechsel oder eine reversible chemische Reaktion aufzunehmen. Durch diese Speicherfunktion wird auch eine tägliche Verschiebung der Heizwärmeabgabe in die Abendstunden möglich.

Ein vorteilhafter Heizkörper weist integrierte Armaturen, insbesondere ein Ausdehnungsgefäß für die Solarkollektoren, ein Sicherheitsventil, Spül- und Entleerhähne und einen Entlüfter, auf. Nach Möglichkeit sind diese so angeordnet, dass keine optische und sicherheitstechnische Beeinträchtigung stattfindet.

Um eine optische und sicherheitstechnische Beeinträchtigung zu vermeiden, kann der Heizkörper einen Auffangbehälter enthalten, in den das Fluid aus den Solarkollektoren zurückfließt, wenn die Pumpe abgeschaltet wird, ein so genanntes Drain-Back-System. Hierzu kann in dem Hohlkörper für den Solarkreislauf ein entsprechendes zusätzliches Hohlvolumen vorgesehen werden. Pro anschließbarem Quadratmeter Kollektor ist mit ungefähr 0,5 Liter zu rechnen. Allerdings muss der Kollektor höher angeordnet werden als der Heizkörper.

In einer vorteilhaften Ausgestaltung wird als Wärmeträger Heizungswasser verwendet und der Heizkörper weist eine Möglichkeit zum Befüllen aus dem Heizungskreislauf heraus auf. Hierbei ist zwischen den Fluidkreisläufen eine Absperrvorrichtung zum Beispiel ein Absperrventil oder ein Kugelhahn vorgesehen, die im regulären Betrieb geschlossen ist und die zum Zwecke des Befüllens des Solarkreislaufs geöffnet werden kann. Diese Variante kommt vorteilhafterweise bei drucklosen Drain-Back-Systemen zum Einsatz. Eine vorteilhafte Ausgestaltung für druckbehaftete Systeme sieht vor, dass als Vorrichtung eine Rückschlagklappe verwendet wird, die von dem Solarkreislauf aus durchlässig ist, so dass ein Ausdehnungsgefäß und Sicherheitsventil entfallen kann. Sobald der Druck im Solarkreislauf über den Druck im Heizkreislauf zuzüglich des Öffnungsdrucks der Rückschlagklappe ansteigt, drückt sich Wasser in den Heizungskreislauf. Zum Befüllen wird die Rückschlagklappe manuell geöffnet. Denkbar ist auch für druckbehaftete Systeme, dass ein Sicherheitsventil, das manuell geöffnet werden kann, zwischen den beiden Fluidkreisläufen diese Funktion übernimmt. Nach dem Befüllen des Solarkreislaufs mit Heizungswasser kann der Heizungskreislauf bequem im Keller nachgefüllt werden.

Alternativ kann eine dauerhafte Verbindung zwischen den beiden Fluidkreisläufen bestehen, die jedoch einen großen Druckverlust oder kleinen Strömungsquerschnitt aufweist, um Fehlzirkulationen aufgrund von Temperaturunterschieden zu vermeiden. Hier können eine Drossel, eine Blende oder Ähnliches zum Einsatz kommen. Für die Montage und Demontage des Heizkörpers sollte die Möglichkeit zum Absperren bestehen.

Bei Heizkörpern, die eine dauerhafte Wärmeübertragung vom zweiten an den ersten Fluidkreislauf, insbesondere den Heizungskreislauf, aufweisen, kann die Kollektortemperatur mit der Heizungsvorlauftemperatur verglichen und bei Überschreiten einer vorgegebenen Differenz kann die Pumpe aktiviert werden, die den Solarkreis in Betrieb nimmt.

In einer vorteilhaften Ausgestaltung eines mehr-lagigen Heizkörpers werden die Fluidkreisläufe zunächst thermisch getrennt voneinander betrieben. Die Umwälzpumpe des Solarkreislaufs wird gemäß dem Stand der Technik in Betrieb genommen, wenn die Kollektortemperatur die Raumtemperatur um eine gewisse Differenz überschreitet und die maximale Raumtemperatur noch nicht erreicht wurde. Steigt die Kollektortemperatur zuzüglich einer bestimmten Differenz über die Heizungsvorlauftemperatur an, werden die beiden Fluidströme thermisch miteinander gekoppelt. Dadurch kann die Solarwärme an andere Heizkörper verteilt werden und direkt Nachheizenergie einsparen.

In einer vorteilhaften Ausgestaltung wird aus der Pumpendrehzahl und der Temperaturdifferenz zwischen Kollektortemperatur und Raumtemperatur eine thermische Leistung abgeleitet. Dazu wird der Pumpendrehzahl ein Volumenstrom zugeordnet. Überschreitet die thermische Leistung einen bestimmten Wert, werden die beiden Fluidkreisläufe thermisch miteinander gekoppelt. Wird der Wert nicht erreicht, erfolgt der thermisch getrennte Betrieb des Heizkörpers gemäß dem Stand der Technik.

Wenn in druckbehafteten Solarkreisläufen Wasser als Wärmeträgermedium eingesetzt wird besteht Gefahr bei Frost. Zur Vermeidung von Frostschäden wird die Umwälzpumpe des Solarkreislaufs in Betrieb genommen, wenn die Kollektortemperatur dem Gefrierpunkt zu nahe kommt. Aufgrund der kurzen Rohrleitungen genügt ein kurzer Betrieb und es geht wenig Wärme verloren. Bei Drain-Back-Systemen entfällt die Problematik.

Der erfindungsgemäße Heizkörper ermöglicht eine kostengünstige Nachrüstung einer dezentralen solaren Heizungsunterstützung für Bestandsgebäude. Dafür wird mindestens ein bestehender Heizkörper, vorteilhaft in einem in südlicher Richtung gelegenen Raum, gegen den erfindungsgemäßen Heizkörper mit der Anschlussmöglichkeit für zwei Fluidkreisläufe ausgetauscht. Die Solarkollektoren werden am Gebäude vorzugsweise in einem steilen Neigungswinkel (z. B. 60 bis 90°) angebracht und an den Heizkörper angeschlossen. Zur Anpassung der Flächen von Heizkörper und Solarkollektorfeld können die Heizkörper serieII verschaltet werden. Auch ist es denkbar, mehrere eigenständige Solarkreisläufe mit Heizkörpern zum Beispiel in unterschiedlichen Wohnungen zu realisieren.

Bei Einsatz eines Kombispeichers für Warmwasser und Raumheizung ist auch die solare Unterstützung der Trinkwarmwasserbereitung denkbar, wenn der erfindungsgemäße Heizkörper auch im Sommer vom Heizungskreislauf durchströmt wird. Die Heizungspumpe läuft in Mehrfamilienhäusern üblicherweise durch. So muss bei Solarstrahlung nur der Heizkörper frei gegeben werden, um thermische Leistung an den Heizungskreislauf und den Speicher übertragen zu können.

Verglichen mit den üblichen Solaranlagen zur Heizungsunterstützung entfällt ein Teil der Investitionskosten für die Rohrleitung und den Wärmespeicher. Vor allem jedoch entfällt die aufwändige Verlegung der Rohrleitungen und der Datenleitung durch das Gebäude in den Keller.

Die Erfindung soll anhand der Zeichnungen näher erläutert werden. Es werden exemplarisch Flachheizkörper dargestellt.

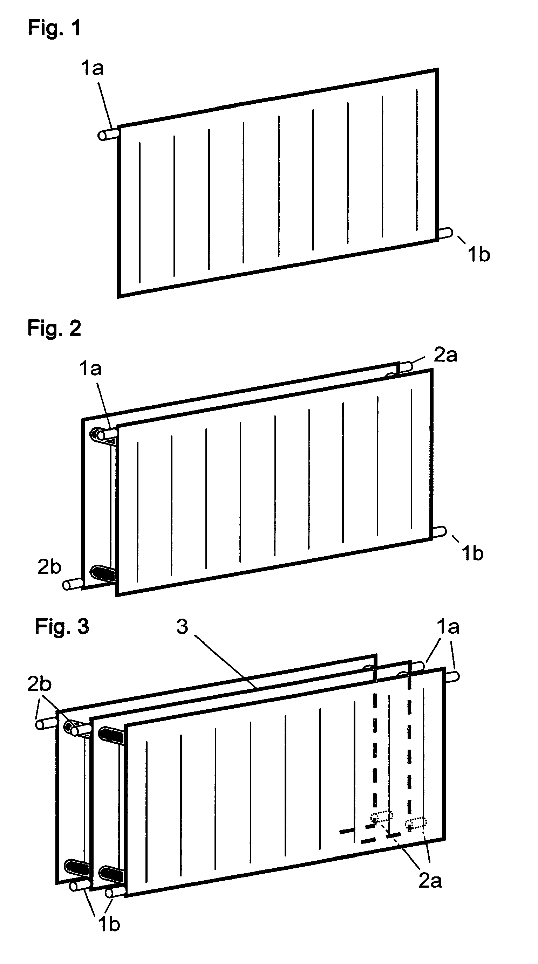

Fig. 1 zeigt als Beispiel für den Stand der Technik einen ein-lagigen Flachheizkörper für den Anschluss eines Heizungskreislaufs mit Ein- und Austritt (1a, 1b). Derartige Heizkörper sind auch in zwei- oder mehr-lagigen Varianten bekannt, bei denen die Flüssigkeit auf mehrere einzelne Hohlkörper verteilt wird.
Fig. 2 zeigt als Beispiel für den Stand der Technik einen Heizkörper mit Anschlussmöglichkeiten für zwei Fluidkreisläufe ohne thermische Kopplung der beiden Fluidkreisläufe. Die Anschlussmöglichkeiten 1a und 1b markieren Ein- und Austritt des ersten Fluidkreislaufs, zum Beispiel des Heizungskreislaufs. Die Anschlussmöglichkeiten 2a und 2b stellen den Ein- und Austritt des zweiten Fluidkreislaufs, zum Beispiel des Solarkreislaufs, dar. Zwischen den Platten findet lediglich eine sehr geringe Wärmeübertragung durch Strahlung und Konvektion statt, die durch geeignete Beschichtungen oder Einbauten mit Dämmwirkung reduziert werden kann.

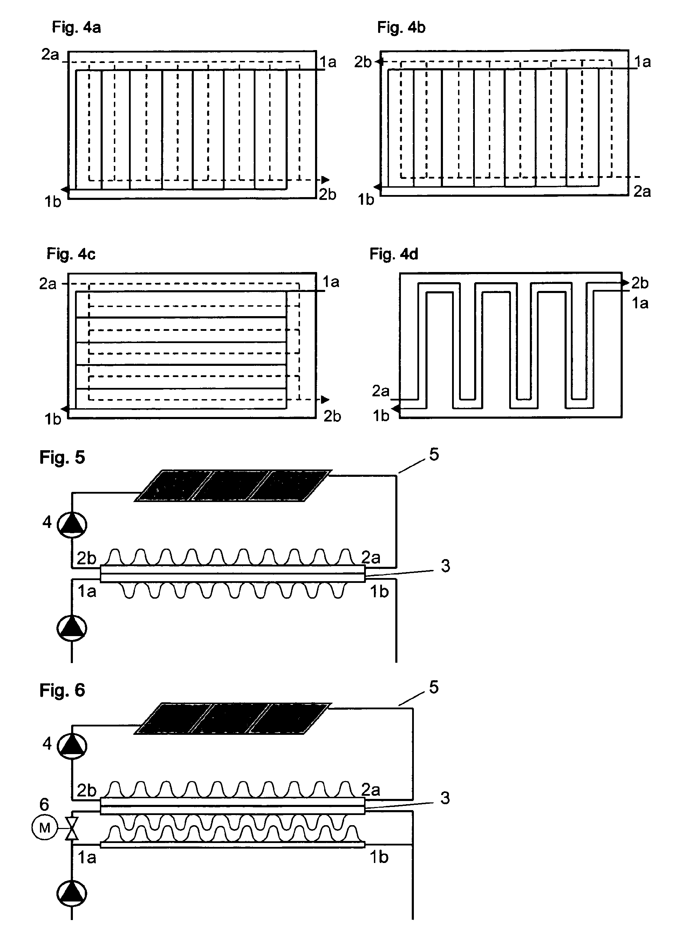

Fig. 3 zeigt einen erfindungsgemäßen Heizkörper, dessen mittlere, durchströmbare Platte (3) eine thermische Kopplung der Fluidströme ermöglicht. Die mittlere durchströmbare Platte besteht vorzugsweise aus Metall und weist Fluidkanäle für zwei Fluidkreisläufe auf, die sich nicht mischen. Auf diese Weise hat der Heizkörper die Funktion, Wärme zwischen den beiden Fluidkreisläufen zu übertragen. Hier ist exemplarisch die Anschlussvariante aus Fig. 4b dargestellt.

Beispielhafte Strömungsführungen innerhalb einer von beiden Fluidkreisläufen durchströmbaren Platte zur Wärmeübertragung sind in den Figuren 4a bis 4d dargestellt.

Die Zeichnungen (Fig. 5 und folgende) geben exemplarisch unterschiedliche Varianten wieder. Die Heizkörper-Thermostat-Ventile werden dabei nicht dargestellt. Eine normale Funktion des konventionellen Heizkörperteils muss gewährleistet sein.

Fig. 5 zeigt beispielhaft das Hydraulikschema eines Solarkreislaufs und eines Heizungskreislaufs mit einem ein-lagigen Heizkörper. Hierbei wird die Solarpumpe (4) des Solarkreislaufs erst in Betrieb genommen, wenn die Kollektortemperatur die Heizungsvorlauftemperatur um eine bestimmte Differenz überschreitet und die Raum-Solltemperatur noch nicht erreicht ist. Dadurch wird die Heizkörpertemperatur erhöht und Wärme an den konventionellen Heizungskreislauf übertragen. Je höher das Temperaturniveau des Heizungskreislaufs ist, desto höher ist die erforderliche solare Bestrahlungsstärke für den Betrieb des Solarkreislaufs.

Fig. 6 zeigt beispielhaft das Hydraulikschema eines Solarkreislaufs und eines Heizungskreislaufs mit einem Heizkörper mit zwei durchströmbaren Platten, bei dem die thermische Kopplung zeitweise realisiert werden kann. Wenn Heizwärmebedarf besteht und die Kollektortemperatur um eine bestimmte Differenz über der Raumtemperatur liegt, wird die Solarpumpe (4) in Betrieb genommen. Das heißt, beide Fluidkreisläufe werden separat betrieben. Die Arbeitstemperatur der Solarkollektoren beträgt ungefähr 25 °C. Wenn die Solarwärme ein ausreichend hohes Temperaturpotenzial besitzt, um Wärme an den ersten Fluidkreislauf, hier den Heizungskreislauf, abgeben zu können, wird das Absperrventil (6), welches mit oder ohne Hilfsenergie betrieben werden kann, geöffnet. Ein Teil des Heizungskreislaufs und der Solarkreislauf strömt durch die gemeinsame Platte (3).

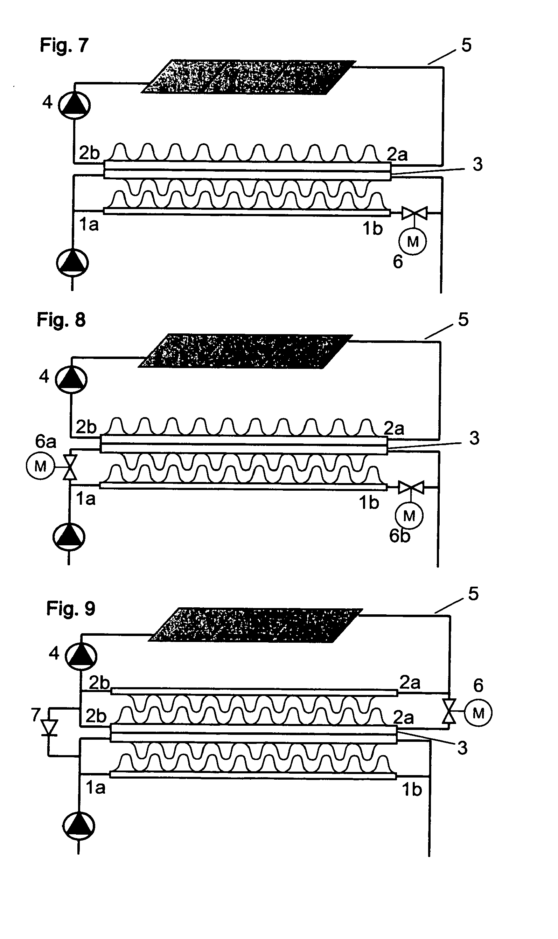

In Fig. 7 ist ein beispielhaftes Hydraulikschema eines Solarkreislaufs und eines Heizungskreislaufs mit einem Heizkörper mit zwei durchströmbaren Platten dargestellt, bei dem die thermische Kopplung zeitweise realisiert werden kann. Sobald die Kollektortemperatur die Temperatur des Heizungsvorlaufs (z. B. 55 °C) um eine bestimmte Differenz überschreitet, wird die Solarkreispumpe (4) in Betrieb genommen. Befindet sich der Heizkörper in einem Raum oder Gebäude, dessen Heizlast bei Sonneneinstrahlung drastisch sinkt, kann gleichzeitig das Ventil (6) geschlossen werden, um die Heizleistung zu drosseln. Je höher das Temperaturniveau des Heizungskreislaufs ist, desto höher ist die erforderliche solare Bestrahlungsstärke für den Betrieb des Solarkreislaufs.

In Fig. 8 ist ein beispielhaftes Hydraulikschema eines Solarkreislaufs und eines Heizungskreislaufs mit einem Heizkörper mit zwei durchströmbaren Platten dargestellt, bei dem die thermische Kopplung zeitweise realisiert werden kann. Je nach Höhe der Heizlast und in Abhängigkeit von der Einstrahlung kann eine unterschiedliche Betriebsweise gewählt werden. Bei hoher Heizlast und starker Solarstrahlung werden beide Platten vom Heizungskreislauf durchströmt, das heißt die Ventile 6a und 6b sind offen, und die Solarpumpe (4) wird in Betrieb genommen. Bei mittlerer Heizlast und starker Solarstrahlung wird die Solarpumpe (4) in Betrieb genommen und der Heizungskreislauf strömt ausschließlich durch die gemeinsame, die obere Platte (3), so dass Wärmeübertragung statt findet. Das heißt Ventil 6b ist geschlossen, 6a ist offen. Bei mittlerer Heizlast und schwacher Solarstrahlung werden beide Fluidkreisläufe separat voneinander betrieben. Das Ventil 6a ist also geschlossen, Ventil 6b ist offen. Der Solarkreislauf wird hierbei effizient bei einer Arbeitstemperatur von ungefähr 25°C betrieben. Zu Zeiten ohne Solarstrahlung wird die Solarpumpe (4) deaktiviert und der Heizungskreislauf wird in der Regel durch beide Heizkörperplatten geführt. Das heißt die Ventile 6a und 6b sind offen.

Fig. 9 zeigt beispielhaft das Hydraulikschema eines Solarkreislaufs und eines Heizungskreislaufs mit einem Heizkörper mit drei durchströmbaren Platten, bei dem die thermische Kopplung zeitweise realisiert werden kann. Hierbei wird der zweite Fluidstrom, also der Solarkreislauf, bei ausreichendem Temperaturniveau umgelenkt. Nachts stehen also zwei von drei Platten für die konventionelle Raumheizung zur Verfügung. Weiterhin ist eine erfindungsgemäße Verbindungsleitung zwischen den beiden Fluidkreisläufen mit einer Rückschlagklappe zu erkennen. Die Rückschlagklappe ermöglicht das Befüllen des Solarkreislaufs mit Heizungswasser und bei Überduck eine Entleerung in den Heizungskreislauf. An dessen Stelle sind unterschiedlichste Absperreinrichtungen, aber auch ein Sicherheitsventil denkbar.

Theoretisch könnte auch eine Verbindungsleitung mit kleiner Öffnung zum Beispiel mit einer Blende verwendet werden, so dass Ausgleichsgefäß, Sicherheitsventil und Befüllhahn entfallen können, da sie eine offene Verbindung darstellt. Für Montage und Demontage des Solarkreislaufs sollte diese Verbindungsleitung absperrbar sein.

Eine beliebige Fortsetzung und Variation mit Heizkörpern mit einer, zwei oder mehr durchströmbaren Platten ist denkbar.

### Bezugszeichenliste

- 1a, 1b: Ein- und Austritt des ersten Fluidkreislaufs (Heizungskreislaufs)
- 2a, 2b: Ein- und Austritt des zweiten Fluidkreislaufs (Solarkreislauf)
- 3: gemeinsam durchströmbarer Hohlkörper
- 4: Umwälzpumpe des zweiten Fluidkreislaufs (Solarkreislaufs)
- 5: Solarkreislauf
- 6, 6a, 6b: Ventile mit Stellantrieb
- 7: Rückschlagklappe

## Patentansprüche

1. Heizkörper mit mindestens zwei Anschlussmöglichkeiten, nämlich Ein- und Austritt (1a, 1b) für einen ersten Fluidkreislauf, vorzugsweise einen Heizungskreislauf, zur Übertragung von Wärme an die Raumluft mit mindestens zwei weiteren Anschlussmöglichkeiten, nämlich Ein- und Austritt (2a, 2b), an die ein zweiter Fluidkreislauf, insbesondere ein Solarkreislauf, angeschlossen werden kann, **dadurch gekennzeichnet, dass** zwischen den beiden Fluidkreisläufen eine möglichst hohe thermische Leistung bei möglichst kleiner Temperaturdifferenz übertragen werden kann, indem ein Hohlkörper aus thermisch gut leitfähigem Material insbesondere einem Metall in geeigneter Weise mit Kanälen für beide Fluidkreisläufe durchsetzt ist.

2. Heizkörper nach Anspruch 1 mit mindestens zwei durchströmbaren Hohlkörpern, **dadurch gekennzeichnet, dass** zeitweise
- die Aktivierung der Übertragung thermischer Leistung durch teilweises oder vollständiges Umlenken eines Fluidkreislaufs auf mindestens einen, vom anderen Fluidkreislauf durchströmten, Hohlkörper (3) hoher thermischer Leitfähigkeit, vorzugsweise eine durchströmbare metallische Platte mit getrennten Kanälen, erfolgt
- und dass zur Deaktivierung der Übertragung thermischer Leistung die Fluidkreisläufe auf unterschiedliche Hohlkörper gelenkt werden, die durch einen Luftzwischenraum oder ein wärmedämmendes Material getrennt sind.

3. Heizkörper nach Anspruch 2, **dadurch gekennzeichnet, dass** mit Hilfe einer integrierten oder anschließbaren Vorrichtung, beispielsweise mit einer Pumpe, einem Absperr-, einem Misch- oder einem Umschaltventil, die Übertragung thermischer Leistung zwischen den Fluidkreisläufen aktiviert und deaktiviert werden kann.

4. Heizkörper nach Anspruch 3, **dadurch gekennzeichnet, dass** der bei Aktivierung der Übertragung thermischer Leistung von beiden Fluidkreisläufen durchströmbare Hohlkörper (3) von einer Wärmedämmung umschlossen ist, die eine Wärmeübertragung an die Raumluft reduziert.

5. Heizkörper nach einem der vorhergehenden Ansprüche, **dadurch gekennzeichnet, dass** die vom zweiten Fluidkreislauf, insbesondere einem Solarkreislauf, durchströmbaren Hohlkörper die Fähigkeit besitzen, Wärme bei 22 bis 45°C durch einen Sorptionsvorgang, einen Phasenwechsel oder eine reversible chemische Reaktion aufzunehmen.

6. Heizkörper nach einem der vorhergehenden Ansprüche, **dadurch gekennzeichnet, dass** der Heizkörper Armaturen für einen oder beide Fluidkreisläufe, insbesondere ein Ausdehnungsgefäß für die thermische Ausdehnung der Flüssigkeit in den Solarkollektoren, ein Sicherheitsventil, Spül- und Entleerhähne und einen Entlüfter, enthält.

7. Heizkörper nach einem der vorhergehenden Ansprüche, **dadurch gekennzeichnet, dass** der Heizkörper einen Auffangbehälter enthält, in den ein Teil des Fluids aus dem zweiten Fluidkreislauf, insbesondere das Fluid aus den Solarkollektoren, zurück fließt, sobald die Pumpe abgeschaltet wird.

8. Heizkörper nach einem der vorhergehenden Ansprüche, **dadurch gekennzeichnet, dass** zwischen den Fluidkreisläufen eine Vorrichtung, insbesondere ein Absperrventil, ein Sicherheitsventil oder eine Rückschlagklappe, besteht, die im regulären Betrieb undurchlässig oder nur von einer Seite durchlässig ist, und die zum Zweck der Befüllung des zweiten Fluidkreislaufs, insbesondere des Solarkreislaufs, manuell geöffnet werden kann.

9. Heizkörper nach einem der vorhergehenden Ansprüche, **dadurch gekennzeichnet, dass** zwischen den Fluidkreisläufen eine absperrbare Verbindung mit hohem Druckverlust oder mit kleiner Öffnung, insbesondere eine absperrbare Blende oder Drossel, besteht, so dass ein Druckausgleich stattfinden kann.

10. Verfahren zum Betreiben des nach einem der vorhergehenden Ansprüche ausgeführten Heizkörpers mit einer Solaranlage, **dadurch gekennzeichnet, dass** mittels der Umwälzpumpe (4) der Solarkreislauf (5) in Betrieb genommen wird, wenn die Kollektortemperatur die Eintrittstemperatur des ersten Fluidkreislaufs um eine vorgegebene Differenz überschreitet und die Raumtemperatur ein vorgegebenes Maximum noch nicht erreicht hat.

11. Verfahren zum Betreiben des nach einem der Ansprüche 1 bis 9 ausgeführten Heizkörpers mit einer Solaranlage, wobei mittels der Umwälzpumpe (4) der Solarkreislauf (5) in Betrieb genommen wird, wenn die Kollektortemperatur die Raumtemperatur um eine vorgegebene Differenz überschreitet und die Raumtemperatur ein vorgegebenes Maximum noch nicht erreicht hat, **dadurch gekennzeichnet, dass** die Übertragung der thermischen Leistung vom Solarkreislauf auf den ersten Fluidkreislauf erst aktiviert wird, wenn die Kollektortemperatur die Eintrittstemperatur des ersten Fluides, insbesondere die Heizungsvorlauftemperatur, um eine vorgegebene Differenz übersteigt.

12. Verfahren nach Anspruch 11, **dadurch gekennzeichnet, dass** die Übertragung der thermischen Leistung vom Solarkreislauf auf den ersten Fluidkreislauf erst aktiviert wird, wenn die aus Pumpendrehzahl und Temperaturdifferenz zwischen Kollektor und Raumtemperatur ableitbare thermische Leistung einen bestimmten Schwellwert überschreitet.

13. Verfahren nach einem der Ansprüche 10 bis 12, **dadurch gekennzeichnet, dass** mittels der Umwälzpumpe (4) der Solarkreislauf (5) in Betrieb genommen wird, wenn die Kollektortemperatur dem Gefrierpunkt des Wärmeträgermediums zu nahe kommt.
